# EUROPÄISCHE PATENTSCHRIFT

(11) **EP 2 698 490 B1**
(45) Veröffentlichungstag und Bekanntmachung des Hinweises auf die Patenterteilung: **19.09.2018**
(21) Anmeldenummer: 13180111.0
(22) Anmeldetag: 12.08.2013
(51) Int. Cl.: E05B 51/02, E05F 15/00, F15B 20/00, F15B 13/02, F16K 17/00

(54) **Notbetätigungsventil**
Emergency valve
Vanne d'actionnement de secours

(30) Priorität: 16.08.2012 DE 102012107527
(43) Veröffentlichungstag der Anmeldung: 19.02.2014
(73) Patentinhaber: Schulte, Reinhold, 33106 Paderborn (DE)
(72) Erfinder: Schulte, Reinhold, 33106 Paderborn (DE)
(74) Vertreter: REHBERG HÜPPE + PARTNER

(56) Entgegenhaltungen:
- US-A- 2 591 801
- US-A1- 2004 149 947

## Beschreibung

### TECHNISCHES GEBIET DER ERFINDUNG

Die Erfindung betrifft ein Notbetätigungsventil für eine Gewährleistung einer manuellen Notöffnung einer ansonsten fluidisch betätigten Fahrzeugtür.

Insbesondere kommt ein solches Notbetätigungsventil bei Fahrzeugtüren für Fahrzeuge wie Busse und Bahnen, die dem Transport von Personen dienen, zum Einsatz. Das Öffnen oder Schließen einer solchen Fahrzeugtür erfolgt im Normalbetrieb über einen fluidisch betätigten Fahrzeugtürantrieb, über den das Öffnen und Schließen der Fahrzeugtür z. B. von einem Fahrer gesteuert werden kann. Insbesondere weist eine solche Fahrzeugtür eine Sicherung in ihrer geschlossenen Stellung auf, sodass beispielsweise ein Öffnen der Fahrzeugtür allein durch den Fahrer kontrolliert werden kann. Diese Sicherung kann mechanisch erfolgen, indem beispielsweise die Fahrzeugtür angehoben wird und dann verriegelt wird. Eine alternative oder zusätzliche Sicherung einer fluidisch herbeigeführten Stellung erfolgt durch das Fluid in den mit der Fahrzeugtür gekoppelten Stellzylindern, welches mit einer Bewegung verdrängt werden muss. Durch die Sicherung der Fahrzeugtür wird u. U. auch ein "Klappern" der Fahrzeugtür während einer Fahrt vermindert. Für Notfälle ist es aber notwendig, dass die Fahrzeugtür auch von Hand geöffnet werden kann, wobei in einigen Fällen auch möglich sein muss, dass dieses unmittelbar an der Fahrzeugtür veranlasst wird. Dazu muss aber die Sicherung der Fahrzeugtür in ihrer geschlossenen Stellung aufgehoben werden können.

### STAND DER TECHNIK

Aus DE 10 2008 011 316 A1 ist eine Handnotschaltung für Pneumatiksysteme, insbesondere für eine pneumatische Türsteuerung für Fahrzeuge bekannt. Die Handnotschaltung ist hier als ein Nebenkreis zu einer Zuführleitung, über die das Pneumatiksystem mit Druckluft versorgt wird, gebildet. Der Nebenkreis weist mehrere zueinander parallel geschaltete Ventilelemente auf, die hier als Notausventile bezeichnet sind und jeweils den Fahrzeugtüren zugeordnet sind, wo diese manuell betätigt werden können. Die Notausventile sind als 3/2-Wegeventil ausgeführt und sind durch manuelle Betätigung von einer Sperrstellung in eine Entlüftungsstellung überführbar. In der Entlüftungsstellung der Notausventile ist ein Aktuator der Fahrzeugtür entlüftet, sodass diese von Hand geöffnet werden kann. Zum Überführen der Ventilelemente von der Entlüftungsstellung zurück in die Sperrstellung auf Veranlassung des Fahrers durch Betätigung eines Knopfes am Armaturenbrett ist eine pneumatisch gesteuerte Rückstellung der Ventilelemente vorgesehen. Dazu weist der Nebenkreis eine Rückstellleitung auf, die von der Druckluftquelle ausgeht und mit den Ventilelementen durch Betätigung eines Rückstellventils verbindbar ist. Die Betätigung, die auf elektromagnetische, mechanische oder manuelle Weise erfolgen kann, hat zur Folge, dass die Ventilelemente mit einem Druckstoß beaufschlagt und in die Sperrstellung zurückgestellt werden. Durch eine Vorspannung des Rückstellventils nimmt es jedoch ohne Betätigung die Stellung ein, in der das Rückstellventil die Verbindung zwischen der Druckluftquelle und den Ventilelementen sperrt, während gleichzeitig die Ventilelemente mit einer Entlüftung verbunden werden.

DE 20 2004 006 526 U1 betrifft eine Betätigungsvorrichtung für eine Notentriegelungseinrichtung an einer Tür für ein Fahrzeug des öffentlichen Personennah- und -fernverkehrs. Die Betätigungsvorrichtung ist mit einem an dem Fahrzeug befestigten Gehäuse gebildet, an dessen Vorderwand ein manuell drehbares Betätigungselement angeordnet ist. Das Betätigungselement ist auf einer Welle angeordnet, die sich in Längsrichtung durch das Gehäuse erstreckt und über die Steuervorrichtungen zur Entriegelung eines Türantriebs betätigt werden können. An einer Seitenwand des Gehäuses kann ein bistabiler Hubmagnet vorgesehen sein, über den die Betätigungsvorrichtung ver- oder entriegelt werden kann. Der Hubmagnet kann dabei mittels einer Funkfernbedienung angesteuert werden. Ferner ist ein Seilzug mit einer Rückstellvorrichtung zur mechanischen Entriegelung des Türantriebs vorgesehen, wobei die Rückstellvorrichtung für den Seilzug pneumatisch gesteuert ist.

DE 10 2010 048 611 A1 betrifft ein Ventil mit einem Ventilelement, das durch manuelles Betätigen eines Handbetätigungsmittels oder durch elektrisches Beaufschlagen einer elektrischen Betätigungseinrichtung aus einer ersten in eine zweite Stellung verschoben werden kann. Zum Verschieben des Ventilelements in die zweite Stellung muss dabei einer auf das Ventilelement wirkenden Federkraft einer Rückstellfeder entgegengewirkt werden, die das Ventilelement in die erste Stellung beaufschlagt. Weiterhin ist für das Handbetätigungsmittel eine Rückstellfeder vorgesehen, die das Handbetätigungsmittel in seine unbetätigte Grundstellung beaufschlagt. Um zu verhindern, dass das Ventilelement mit der Wegnahme einer Krafteinwirkung auf das Handbetätigungsmittel in die erste Stellung zurückkehrt, kann das Handbetätigungsmittel in seiner Arbeitsstellung, in der das Ventilelement durch das Handbetätigungsmittel in die zweite Stellung verschoben ist, mit dem Ventilgehäuse axial unbeweglich verriegelt werden, womit das Ventilelement in seiner zweiten Stellung gesichert wird.

Aus DE 10 2009 058 977 A1 ist ein Hydraulikzylinder mit einem Kolben bekannt, wobei eine Kolbenbewegung über eine fluidische Beaufschlagung von zwei an den Kolben angrenzenden Druckräumen steuerbar ist. Einem der Druckräume ist ein elektromagnetisch steuerbares 2/2-Wegeventil vorgeschaltet, das zum Sichern des Kolbens in seiner Stellung von einem Öffnungszustand in einen Schließzustand umgeschaltet wird.

Aus DE 100 31 873 A1 ist ein hydraulisches Ventil bekannt, dessen Steuerkolben betätigt werden kann, indem ein Stößel, welcher in einem Polrohr des Ventils axial verschiebbar angeordnet ist, von seiner Ruhelage in seine betätigte Stellung überführt wird. Zum einen kann eine Verschiebung des Stößels in die betätigte Stellung durch manuelles Betätigen eines Handbetätigungsmittel erreicht werden. Zum anderen kann der Stößel durch elektrisches Beaufschlagen einer das Polrohr umschließenden Magnetspule in die betätigte Stellung überführt werden. Beim Wegfall der Betätigung über das Handbetätigungsmittel oder über die Magnetspule kehrt der Stößel aufgrund von durch Rückstellfedern bewirkten Federkräften in seine Ruhelage zurück.

US 2004/0149947 A1 offenbart ein Ventil, welches im Normalbetrieb eines hieran angeschlossenen Verbrauchers eine Öffnungsstellung einnimmt und bei einem sensierten Fehler in dem Verbraucher, insbesondere einer Leckage des Verbrauchers, in eine Sperrstellung überführt werden kann, um den Verbraucher von der Versorgung mit dem Fluid abzusperren. Bei dem an das Fluid angeschlossenen Verbraucher handelt es sich um einen Boiler, eine Waschmaschine, einen Kühlschrank, eine Eismaschine, eine Spülmaschine, eine Toilette, ein Bidet, eine Dusche, ein Whirlpool, ein fluidisches Heizsystem, einen Luftbefeuchter, eine Sprinkler-Anlage u. ä. Das Ventil ist ein 2/2-Wegeventil in Sitzventil-Bauweise. Beide Betriebsstellungen des Ventils sind stabil ausgebildet. Hierbei wird die Schließstellung des Ventils aufrechterhalten durch eine in Schließrichtung auf das Ventilelement wirkende vorgespannte Schließfeder. Hingegen wird die Öffnungsstellung bei entsprechend vorgespannter Schließfeder gesichert durch einen mit dem Ventilelement verbundenen Anker, der in der Öffnungsstellung an einem Stator eines Elektromagneten anliegt. Das Ventil ist hinsichtlich der eingangsseitig sowie ausgangsseitig anliegenden Drücke druckausgeglichen ausgebildet, so dass eine Sicherung der Stellungen des Ventils und eine Veränderung einer Stellung des Ventils mit kleinen Kräften möglich ist. Aus diesem Grund ist zum Halten des Ankers an dem Stator und damit Halten des Ventilelements in der Schließstellung keine Bestromung des Elektromagneten erforderlich. Vielmehr kann eine nach impulsartiger Ansteuerung des Elektromagneten verbleibende Restmagnetisierung des Stators ausreichen, um den Anker an dem Stator zu halten. Über die genannte Restmagnetisierung wird somit das Ventil während des Normalbetriebs des Verbrauchers ohne Leckage in der Öffnungsstellung gehalten. Wird hingegen sensiert, dass ein Fehler in dem Verbraucher, insbesondere eine Leckage, aufgetreten ist, magnetisiert der Elektromagnet mit entgegengesetzter elektronischer Ansteuerung den Stator derart in entgegengesetzter Richtung, dass sich der Anker von dem Stator lösen kann. Damit kommt die vorgespannte Schließfeder zur Wirkung, die das Ventilelement in die Schließstellung bewegt und dann in der Schließstellung sichert.

Die Druckschrift US 2,591,801 A offenbart ein 3/2-Wegeventil in Sitzventil-Bauweise, welches zur Steuerung der fluidischen Beaufschlagung eines Arbeitszylinders eingesetzt werden kann. In einer Öffnungsstellung verbindet das Ventil einen Eingangsanschluss mit einem Ausgangs anschluss. Hingegen wird in einer Schließstellung des Ventils der Eingangsanschluss abgesperrt, während der Ausgangsanschluss mit einer Entlüftung verbunden wird. Mittels eines Elektromagneten kann ein Ventilelement in die Öffnungsstellung gezogen und in dieser gehalten werden. Bei Deaktivierung der elektrischen Beaufschlagung des Elektromagneten wird das Ventilelement durch das Eigengewicht in Schließrichtung bewegt und dann in dieser gehalten. In dem Ventil ist der Ausgangsanschluss über ein in Richtung der Entlüftung sperrendes Kugel-Rückschlagventil mit der Entlüftung verbunden. In der Öffnungsstellung nimmt die Kugel des Kugel-Rückschlagventils infolge des Druckunterschiedes zwischen dem Ausgangsanschluss und der Entlüftung die Sperrstellung ein. Zusätzlich zu der elektronischen Steuerung kann eine manuelle Bewegung des Ventilelements über einen Betätigungsknopf herbeigeführt werden.

### AUFGABE DER ERFINDUNG

Der Erfindung liegt die Aufgabe zugrunde, ein alternatives oder verbessertes Notbetätigungsventil für eine Gewährleistung einer manuellen Notöffnung einer ansonsten fluidisch betätigten Fahrzeugtür aufzuzeigen. Insbesondere soll durch das erfindungsgemäße Notbetätigungsventil
- eine Steuerung des Notbetätigungsventils vereinfacht werden,
- eine Erweiterung der Steuerungsmöglichkeiten möglich sein,
- ein Bauaufwand reduziert werden und/oder
- eine modifizierte oder verbesserte Sicherung des Notbetätigungsventils in Normalbetriebsstellung ermöglicht werden.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Durch ein Notbetätigungsventil für eine fluidisch betätige Fahrzeugtür soll gewährleistet werden, dass die Fahrzeugtür in einer Notsituation auch manuell geöffnet werden kann. Dazu kann das Notbetätigungsventil ein Handbetätigungsmittel wie bspw. einen Drehknopf, Drehhebel oder einen Betätigungsknopf aufweisen, über das ein Ventilelement von einer Normalbetriebsstellung in eine Notbetriebsstellung, in der eine manuelle Notöffnung der ansonsten fluidisch betätigten Fahrzeugtür erfolgen kann, überführbar ist. Es hat sich dabei allerdings herausgestellt, dass eine manuelle Notöffnung der Fahrzeugtür in manchen Betriebssituationen des Fahrzeugs eine Gefahrenquelle darstellen kann und die Notöffnung deshalb in solchen Betriebssituationen verhindert werden muss. Eine solche Gefahrenquelle kann beispielsweise vorliegen, wenn sich die Fahrzeugtür während einer Fahrt des Fahrzeugs, möglicherweise auch mit einer hohen Fahrgeschwindigkeit, öffnet. Auch in einer Parksituation oder bei einem Abstellen des Fahrzeugs mit deaktivierter Zündung und Leistungsversorgung soll u. U. ein Öffnen der Fahrzeugtür mit einem missbräuchlichen Betätigen eines Notbetätigungsventils, wenn dieses von außerhalb des Fahrzeugs zugänglich ist, verhindert werden können.

Zudem hat es sich herausgestellt, dass das Notbetätigungsventil oftmals nicht nur in Notsituationen betätigt wird, sondern auch versehentlich oder missbräuchlich durch Fahrzeuggäste ausgelöst wird, z. B. um das Fahrzeug an einer Weiterfahrt zu hindern. Für die ordnungsgemäße Weiterfahrt muss dann das Ventilelement des Notbetätigungsventils zunächst wieder von der Notbetriebsstellung in die Normalbetriebsstellung überführt werden. Dazu ist es vorteilhaft, wenn das Ventilelement nicht ausschließlich manuell wieder in die Normalbetriebsstellung überführt werden kann, wozu beispielsweise der Fahrer seinen Fahrersitz verlassen müsste.

Gemäß der Erfindung weist das Notbetätigungsventil deshalb eine elektrisch angesteuerte Beaufschlagungseinrichtung mit einem Elektromagneten auf. Der Elektromagnet wirkt dabei elektromagnetisch auf das Ventilelement ein, sodass das Ventilelement mittels der Betätigungsvorrichtung von der Notbetriebsstellung in die Normalbetriebsstellung überführbar ist. Gleichzeitig wird durch die elektrisch angesteuerte Beaufschlagungseinrichtung gewährleistet, dass das Ventilelement in der Normalbetriebsstellung gesichert werden kann, was durch eine elektromagnetische Sicherungskraft erfolgt, die der Elektromagnet auf das Ventilelement aufbringt. Hierbei ist die Sicherungskraft so dimensioniert, dass diese größer ist als eine von einem Benutzer auf das Handbetätigungsmittel aufbringbare Betätigungskraft.

Das Ventilelement kann z. B. in der Normalbetriebsstellung gesichert sein, wenn eine von den oben genannten Betriebssituationen vorliegt, sodass dann die manuelle Notöffnung mit einer Betätigung des Notbetätigungsventils nicht möglich ist. Erst wenn die Beaufschlagungseinrichtung derart elektrisch angesteuert ist, dass das Ventilelement "freigegeben" ist (also die Sicherungskraft zumindest reduziert ist), kann das Ventilelement von der Normalbetriebsstellung in die Notbetriebsstellung überführt werden, sodass eine manuelle Notöffnung erfolgen kann. Beispielsweise kann dann die Fahrzeugtür von Hand aufgeschoben werden.

Das Ventilelement des erfindungsgemäßen Notbetätigungsventils kann beliebig gestaltet sein, bspw. ein- oder mehrstückig, u. U. mit einem integrierten Übertragungsmechanismus. Das Ventilelement kann mit einem beliebigen fluidischen Fahrzeugtür-Steuerkreis, insbesondere einem elektrohydraulischen oder pneumatischen Fahrzeugtür-Steuerkreis, zur Gewährleistung der manuellen Notöffnung zusammenwirken. Mit dem Ventilelement kann ein 2/2-Wegeventil gebildet sein, wobei das Ventilelement in der Notbetriebsstellung eine Durchgangsstellung einnimmt, während dieses in der Normalbetriebsstellung eine Sperrstellung des 2/2-Wegeventils einnimmt. Mit dem Ventilelement kann auch ein 3/2-Wegeventil oder 5/2-Wegeventil oder beliebig anderes Ventil gebildet sein. Die Normal- und die Notbetriebsstellung können mit beliebigen anderen Stellungen des Ventilelements verwirklicht sein. Hierbei kann das mit dem Ventilelement gebildete Ventil in Sitz- oder Schieberbauweise ausgebildet sein.

Mit Betätigen des Handbetätigungsmittels und/oder mit Beaufschlagen der Beaufschlagungseinrichtung kann beispielsweise eine Veränderung einer Stellung oder Position des Ventilelements herbeigeführt werden, wodurch das Ventilelement von der Normalbetriebsstellung in die Notbetriebsstellung oder umgekehrt von der Notbetriebsstellung in die Normalbetriebsstellung überführt wird. Das Ventilelement ist dabei vorzugsweise aus oder mit einem magnetischen Material hergestellt.

In einer bevorzugten Ausführungsform des erfindungsgemäßen Notbetätigungsventils führt eine elektrische Beaufschlagung der Beaufschlagungseinrichtung dazu, dass das Ventilelement von der Notbetriebsstellung in die Normalbetriebsstellung überführbar ist und/oder das Ventilelement in der Normalbetriebsstellung gesichert ist. Beispielsweise kann der Elektromagnet dazu als Spule ausgebildet sein. Durch einen Stromfluss durch die Spule kann so ein geeignetes Magnetfeld bewirkt werden, das auf das Ventilelement derart einwirkt, dass es von der Notbetriebsstellung in die Normalbetriebsstellung überführt wird und/oder in der Normalbetriebsstellung gesichert ist.

In einer vorteilhaften Ausführungsform des erfindungsgemäßen Notbetätigungsventils kann das Ventilelement nicht nur durch Betätigung des Handbetätigungsmittels von der Normalbetriebsstellung in die Notbetriebsstellung überführt werden, sondern auch mittels der Beaufschlagungseinrichtung. Damit kann eine Betätigung des Notbetätigungsventils für die Gewährleistung der manuellen Notöffnung auch elektrisch angesteuert werden und so bspw. durch den Fahrer ausgelöst werden. Beispielsweise kann dies erreicht werden, indem die Beaufschlagungseinrichtung einen Elektromagneten aufweist, der mit zwei Spulen mit umgekehrten Wicklungen gebildet ist. Durch einen Stromfluss durch eine der beiden Spulen kann so ein geeignetes Magnetfeld erzeugt werden, dass das Ventilelement von der Notbetriebsstellung in die Normalbetriebsstellung überführt und in dieser gesichert wird, wohingegen durch einen Stromfluss durch die andere Spule mit der umgekehrten Wicklung ein Magnetfeld mit umgekehrter Richtung erzeugt wird und so ein Überführen des Ventilelements von der Normalbetriebsstellung in die Notbetriebsstellung erreicht wird. Alternativ kann auch eine Richtungsumkehr des Stromflusses durch eine Spule des Elektromagneten erreicht werden, dass sich die Richtung des resultierenden Magnetfelds umkehrt.

Insbesondere kann das Notbetätigungsventil eine Steuereinheit aufweisen oder an eine Steuereinheit angeschlossen werden, über die die elektrische Beaufschlagung der Beaufschlagungseinrichtung steuerbar ist. Durch die Steuereinheit ist damit steuerbar, ob eine manuelle Notöffnung durch das Notbetätigungsventil möglich oder verhindert sein soll, indem steuerbar ist, ob das Ventilelement in der Normalbetriebsstellung gesichert ist. Auch kann über die Steuereinheit das Überführen des Ventilelements von der Notbetriebsstellung in die Normalbetriebsstellung und ggf. in umgekehrter Richtung von der Normalbetriebsstellung in die Notbetriebsstellung gesteuert werden. Die Steuereinheit kann dabei für das Notbetätigungsventil separat vorgesehen sein. Die Steuereinheit kann aber auch eine zentrale Steuereinheit für den Fahrzeugtürantrieb oder auch für das gesamte Fahrzeug sein.

Beispielsweise kann über die Steuereinheit die elektrische Beaufschlagung der Beaufschlagungseinrichtung gemäß Fahrerwünschen erfolgen. In der Steuereinheit können aber auch Fahrbetriebsparameter wie eine Geschwindigkeit des Fahrzeugs o. ä. vorliegen, sodass in Abhängigkeit dieser Fahrbetriebsparameter die elektrische Beaufschlagung der Beaufschlagungseinrichtung gesteuert werden kann.

In einer bevorzugten Ausführungsform des erfindungsgemäßen Notbetätigungsventils ist die Steuereinheit mit Steuerlogik ausgestattet, über die elektrische Beaufschlagung der Beaufschlagungseinrichtung in Abhängigkeit von einem Fahrantritt des Fahrzeugs steuerbar ist. Indiziert werden kann der Fahrantritt beispielsweise durch eine Erkennung eines Betätigens einer Zündung des Fahrzeugs, einer Fahrersitzbelegung, eines Lösens einer Handbremse, eines Einlegens eines Gangs oder eines Betätigens eines Gaspedals. Derartige Erkennungssignale werden typischerweise ohnehin in einem Fahrzeug bereitgestellt und können somit in einfacher Weise auch für die Steuerung der elektrischen Beaufschlagung der Beaufschlagungseinrichtung genutzt werden.

Die Steuerlogik kann auch derart ausgebildet sein, dass die elektrische Beaufschlagung der Beaufschlagungseinrichtung in Abhängigkeit von einer Fahrgeschwindigkeit des Fahrzeugs erfolgt. Damit kann erreicht werden, dass bei Überschreiten einer Grenzgeschwindigkeit, bspw. einer Fahrgeschwindigkeit von 3 km/h, eine manuelle Notöffnung durch Betätigen des Notbetätigungsventils verhindert wird, indem das Ventilelement durch die Beaufschlagungseinrichtung in seiner Normalbetriebsstellung gesichert ist.

In weiterer Ausgestaltung des erfindungsgemäßen Notbetätigungsventils kann die Steuereinheit mit Steuerlogik ausgestattet sein, über die nach einem fluidischen Schließen der Fahrzeugtür automatisch eine elektrische Beaufschlagung der Beaufschlagungseinrichtung erfolgt, sodass das Ventilelement die Normalbetriebsstellung einnimmt. Insbesondere kann damit erreicht werden, dass die Fahrzeugtür nach einem fluidischen Schließen in dem geschlossenen Zustand gesichert ist und ein manuelles Öffnen der Fahrzeugtür zunächst nicht möglich ist, sondern dies erst nach Betätigen des Notbetätigungsventils möglich ist.

Grundsätzlich kann u. U. über die Kenntnis, ob eine elektrische Beaufschlagung der Beaufschlagungseinrichtung vorliegt oder nicht, festgestellt werden, ob gewährleistet ist, dass sich das Ventilelement in der Normalbetriebsstellung befindet. Ohne elektrische Beaufschlagung der Beaufschlagungseinrichtung kann das Notbetätigungsventil multi- oder bistabil sein, sodass u. U. nicht bekannt ist, in welcher Stellung sich das Notbetätigungsventil befindet. In einer vorteilhaften Ausführungsform des erfindungsgemäßen Notbetätigungsventils weist das Notbetätigungsventil einen Sensor auf, über den eine Position und/oder ein Stellweg des Ventilelements erfasst wird. Über den Sensor kann damit unabhängig ermittelt werden, ob sich das Ventilelement in der Normalbetriebsstellung oder in der Notbetriebsstellung befindet.

Der Sensor kann dazu beliebig ausgestaltet sein. Um lediglich einige nicht beschränkende Beisiele zu nennen kann der Sensor ein Hall-Sensor oder ein Taster sein. Für eine berührungslose Sensierung und damit besonders einfache, wartungsarme Integration kann für eine Ausführungsform der Erfindung der Sensor ein Reed-Sensor sein, der die Position eines an dem Ventilelement angeordneten Permanentmagnets erfasst.

In weiterer Ausgestaltung kann der Sensor mit einer Steuereinheit verbunden sein, wobei die Steuereinheit mit Steuerlogik ausgestattet ist, welche unter Berücksichtigung des Signals des Sensors, d. h. der Position oder des Stellwegs des Ventilelements, ein Signal erzeugt, welches indiziert, ob das Ventilelement in der Notbetriebsstellung ist. Insbesondere kann dem Fahrer so indiziert werden, ob das Ventilelement in der Notbetriebsstellung ist. Beispielsweise kann dazu ein Signalelement am Armaturenbrett vorgesehen sein, welches indiziert, ob alle Ventilelemente gesichert sind oder nicht. Möglich ist aber auch, dass jedem Bentilelement eine separate Anzeige zugeordnet ist, sodass der Fahrer erkennen kann, welches Notbetätigungsventil nicht in einer Normalbetriebsstellung ist. Es kann aber auch ein Signalelement an der Fahrzeugtür vorgesehen sein, um anzuzeigen, dass bei der zugeordneten Fahrzeugtür das Notbetätigungsventil betätigt worden ist.

Insbesondere kann das Ventilelement in der Notbetriebsstellung eine Sicherung der Fahrzeugtür in der geschlossenen Stellung aufheben. Eine solche Sicherung der Fahrzeugtür kann beispielsweise vorgesehen sein, um ein missbräuchliches Öffnen der Fahrzeugtür zu verhindern. Über eine derartige Sicherung kann aber auch ein "Klappern" der Fahrzeugtür während einer Fahrt verhindert werden. Typischerweise wird bei fluidisch betätigten Fahrzeugtüren eine derartige Sicherung automatisch mit dem fluidisch betätigten Schließen der Fahrzeugtür bewirkt und erst mit dem fluidisch betätigten Öffnen der Fahrzeugtür oder durch Betätigen des Notbetätigungsventils wieder aufgehoben.

In einer bevorzugten Ausführungsform des erfindungsgemäßen Notbetätigungsventils ist dieses derart ausgebildet, dass das Ventilelement ohne elektrische Beaufschlagung der Beaufschlagungseinrichtung und ohne eine Betätigung des Handbetätigungsmittels eine eingenommene Notbetriebsstellung oder Normalbetriebsstellung beibehält. Durch diese bistabile Ausgestaltung des Ventilelements kann beispielsweise erreicht werden, dass trotz eines Stromausfalls und damit eines Ausfalls der elektrischen Beaufschlagung der Beaufschlagungseinrichtung das Ventilelement seine Stellung beibehält.

Der Elektromagnet des erfindungsgemäßen Notbetätigungsventils kann mit (mindestens) einer Spule gebildet sein, die zumindest teilweise durch ein Spulenkern durchsetzt ist, der eine quer zur Längsachse der Spule orientierte Stirnfläche besitzt. In einer bevorzugten Ausführungsform des erfindungsgemäßen Notbetätigungsventils ist der Abstand des Ventilelements von der Stirnfläche des Spulenkerns in der Normalbetriebsstellung minimal. So kann nämlich der durch die Spule bewirkte magnetische Fluss optimal durch den Spulenkern und das Ventilelement geführt werden, sodass eine besonders gute Sicherung des Ventilelements in der Normalbetriebsstellung mit einer großen Sicherungskraft, u. U. auch bei kleiner elektrischer Leistungsaufnahme, erreicht werden kann. Im Extremfall kann in der Normalbetriebsstellung das Ventilelement an der Stirnfläche des Spulenkerns anliegen, sodass der Abstand im wesentlichen Null beträgt. Es kann aber auch ein Luftspalt zwischen der Stirnfläche und dem Ventilelement vorgesehen sein.

Zur Befestigung des Notbetätigungsventils an einem Tragelement kann der Spulenkern in einem Endbereich eine Erweiterung und in einem anderen Endbereich ein Außengewinde besitzen. Durch das Aufschrauben eines Gehäuseteils auf das Außengewinde an dem anderen Endbereich des Spulenkerns kann eine Verspannung des Tragelements und eines Spulenkörpers des Elektromagneten zwischen der Erweiterung und dem auf das Außengewinde aufgeschraubten Gehäuseteil erfolgen. Insbesondere kann damit also die Befestigung des Notbetätigungsventils über den Spulenkern an dem Tragelement erfolgen. Das Tragelement kann dabei beispielsweise eine Wandung des Fahrzeugs sein.

In weiterer Ausgestaltung kann das Handbetätigungsmittel gegenüber dem auf das Außengewinde aufgeschraubten Gehäuseteil geführt sein. Damit kann eine besonders gute Übertragung der Betätigung des Handbetätigungsmittels auf das Überführen des Ventilelements von der Normalbetriebsstellung in die Notbetriebsstellung erreicht werden. Beispielweise kann die Bewegung des Handbetätigungsmittels bei einer Betätigung gegenüber dem Gehäuseteil geführt sein.

Zur Befestigung eines Ventilgehäuses ist die Erweiterung des Spulenkerns in einer vorteilhaften Ausführung des erfindungsgemäßen Notbetätigungsventils mit einem Gewinde ausgestattet. Dadurch kann insbesondere eine einfache Montage und Demontage des Ventilelements erfolgen. Damit kann auch auf besonders einfache Weise eine Anpassung an verschiedene Ventilelemente für verschiedene fluidisch betätigte Fahrzeugtüren erfolgen, sodass das erfindungsgemäße Notbetätigungsventil flexibel einsetzbar ist.

Der Sensor zur Erfassung der Position und/oder des Stellwegs des Ventilelements kann grundsätzlich an einer beliebigen Stelle angeordnet sein und auf beliebige Weise mit dem Ventilelement in Wirkverbindung treten. In einer bevorzugten Ausführungsform ist das Ventilelement mit einem Fortsatz gebildet, der mit dem Sensor in Wirkverbindung tritt, sodass der Sensor die Position oder den Stellweg des Ventilelements erfassen kann. Der Fortsatz kann hierzu aus einem Ventilgehäuse des Ventils auskragen und in den an dem Ventilgehäuse befestigten Sensor hineinkragen. Indem das Ventilelement mit einem Fortsatz gebildet ist, ist eine besonders einfache Montage des Sensors möglich. Gleichzeitig wird u. U. die Anordnung von weiteren möglichen Bauteilen wie Anschlüssen zum Anschließen des Ventilelements möglichst wenig behindert.

Zum Überführen des Ventilelements von der Normalbetriebsstellung in die Notbetriebsstellung mittels der Betätigung des Handbetätigungsmittels, kann das Handbetätigungsmittel grundsätzlich auf beliebige Weise mit dem Ventilelement gekoppelt sein. Beispielsweise kann über das Handbetätigungsmittel das Ventilelement sowohl von der Normalbetriebsstellung in die Notbetriebsstellung als auch in umgekehrter Richtung von der Notbetriebsstellung in die Normalbetriebsstellung überführt werden, sodass eine Kopplung zwischen Handbetätigungsmittel und Ventilelement in beide Richtungen besteht. In einer bevorzugten Ausführungsform des erfindungsgemäßen Notbetätigungsventils ist das Handbetätigungsmittel jedoch nur einseitig wirkend mit dem Ventilelement gekoppelt. Damit können mit dem Handbetätigungsmittel nur Kräfte in einer Betätigungsrichtung auf das Ventilelement ausgeübt werden. Insbesondere kann das Ventilelement dementsprechend nur durch Betätigung des Handbetätigungsmittels von der Normalbetriebsstellung in die Notbetriebsstellung überführt werden, wohingegen das Überführen des Ventilelements von der Notbetriebsstellung in die Normalbetriebsstellung mit dem Handbetätigungsmittel nicht möglich ist.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt stark schematisiert ein erfindungsgemäßes Notbetätigungsventil in Ausbildung mit einem 2/2-Wegeventil.
- **Fig. 2**: zeigt stark schematisiert ein erfindungsgemäßes Notbetätigungsventil in Ausbildung mit einem 3/2-Wegeventil.
- **Fig. 3**: zeigt ein erfindungsgemäßes Notbetätigungsventil in einem Längsschnitt, wobei sich das Notbetätigungsventil in einer Normalbetriebsstellung befindet.
- **Fig. 4**: zeigt das Notbetätigungsventil gemäß Fig. 3 in einer Notbetriebsstellung.
- **Fig. 5**: zeigt schematisch einen fluidischen Fahrzeugtür-Steuerkreis mit einem erfindungsgemäßen Notbetätigungsventil gemäß Fig. 1.
- **Fig. 6**: zeigt schematisch einen hydraulischen Fahrzeugtür-Steuerkreis mit dem erfindungsgemäßen Notbetätigungsventil gemäß Fig. 1.

### FIGURENBESCHREIBUNG

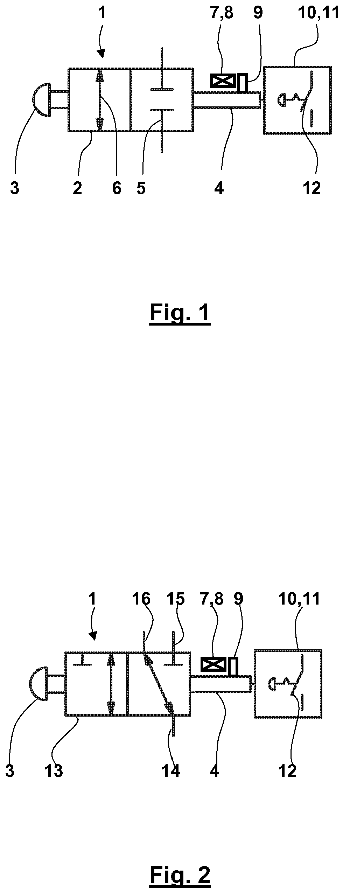

**Fig. 1** zeigt ein erfindungsgemäßes Notbetätigungsventil 1, das mit einem 2/2-Wegeventil 2 gebildet ist. Durch Betätigung eines Handbetätigungsmittels 3 des Notbetätigungsventils 1 kann ein Ventilelement 4 von einer Normalbetriebsstellung in eine Notbetriebsstellung überführt werden. In Fig. 1 befindet sich das Ventilelement 4 in der Normalbetriebsstellung, in der sich das 2/2-Wegeventil 2 in einer Sperrstellung 5 befindet. Mit einer Betätigung des Handbetätigungsmittels 3 wird das Ventilelement 4 von der Normalbetriebsstellung in die Notbetriebsstellung überführt, die einer Durchlassstellung 6 des 2/2-Wegeventils 2 entspricht.

Das Notbetätigungsventil 1 weist eine Beaufschlagungseinrichtung 7 auf, die mit einem Elektromagneten 8 gebildet ist. Durch ein elektrisches Beaufschlagen der Beaufschlagungseinrichtung 7 wird eine elektromagnetische Kraft durch den Elektromagneten 8 erzeugt, die bewirkt, dass das Ventilelement 4 seine Normalbetriebsstellung einnimmt, in der ein Anschlag 9 des Ventilelements 4 in minimalem Abstand zu dem Elektromagneten 8 angeordnet ist. In der Normalbetriebsstellung wird durch die elektrische Beaufschlagung der Beaufschlagungseinrichtung 7 gewährleistet, dass das Ventilelement 4 durch eine Sicherungskraft In der Normalbetriebsstellung gesichert ist. Die auf das Ventilelement 4 wirkende Sicherungskraft ist dann vorzugsweise größer als eine durch Betätigung des Handbetätigungsmittels 3 aufbringbare Betätigungskraft, sodass bei elektrischer Beaufschlagung des Elektromagneten 8 insbesondere eine mutwillige manuelle Betätigung unterbunden ist. Erst wenn die Beaufschlagungseinrichtung 7 derart elektrisch angesteuert ist, dass die von dieser erzeugte Kraft reduziert oder sogar Null ist, kann das Ventilelement 4 durch ein manuelles Betätigen des Handbetätigungsmittels 3 von der Normalbetriebsstellung in die Notbetriebsstellung überführt werden. Das 2/2-Wegeventil 2 kann dann manuell von seiner Sperrstellung 5 in die Durchlassstellung 6 überführt werden. Der Anschlag 9 wirkt als eine Art Anker, mit dem der Elektromagnet 8 die Sicherungskraft und die erforderliche Kraft zur Bewegung des Ventilelements 4 von der Notbetriebsstellung in die Normalbetriebsstellung erzeugt.

Das Notbetätigungsventil 1 besitzt optional einen Sensor 10, der in Fig. 1 als Taster 11 ausgebildet ist. Wenn das Ventilelement 4 von der Normalbetriebsstellung in die Notbetriebsstellung überführt wird, wird mechanisch ein Kontakt 12 des Tasters 11 geschlossen. Durch den Sensor 10 kann damit ermittelt werden, ob sich das Ventilelement 4 in der Notbetriebsstellung befindet und somit das Notbetätigungsventil 1 betätigt ist.

**Fig. 2** zeigt ein erfindungsgemäßes Notbetätigungsventil 1, das bei ansonsten Fig. 1 entsprechender Ausgestaltung mit einem 3/2-Wegeventil 13 ausgebildet ist. Bei dem Notbetätigungsventil 1 gemäß Fig. 2 wird gewährleistet, dass in der Notbetriebsstellung des Ventilelements 4 zwei andere von Anschlüssen 14 bis 16 über das 3/2-Wegeventil 13 miteinander verbunden sind als in der Normalbetriebsstellung des Ventilelements 4. Gemäß Fig. 2 sind in der Notbetriebsstellung zwei gegenüberliegende Anschlüsse 14, 15 miteinander verbunden, während ein dritter Anschluss 16 gesperrt ist. In der Normalbetriebsstellung hingegen sind die zwei gegenüberliegenden Anschlüsse 14, 15 nicht miteinander verbunden, sondern die Anschlüsse 14 und 16, wobei der Anschluss 15 gesperrt ist.

Abweichend zu den in Fig. 1 und Fig. 2 dargestellten Ausführungsformen des Notbetätigungsventils 1 kann dieses auch mit beliebig anderen Ventilen anstelle des dargestellten 2/2-Wegeventils 2 oder 3/2-Wegeventils 13 gebildet sein.

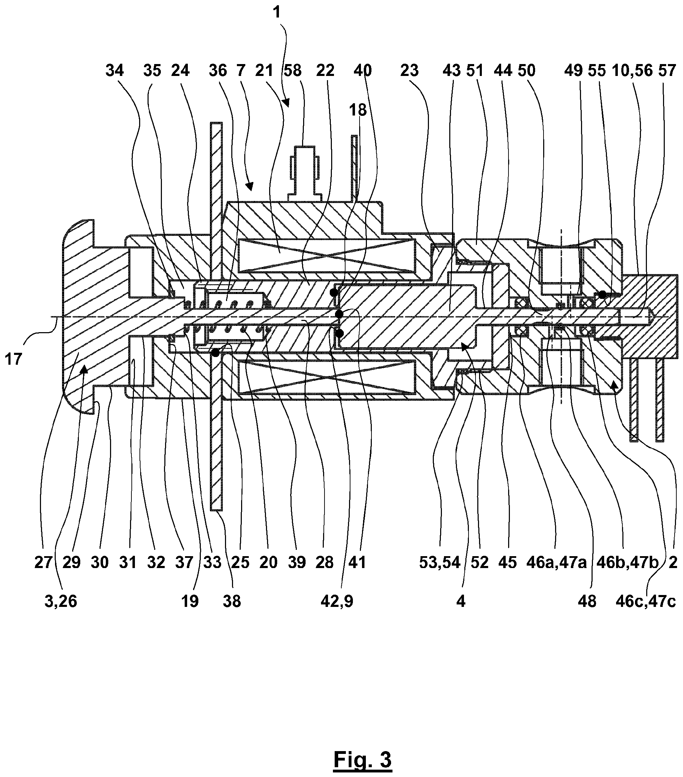

In **Fig. 3** ist ein Notbetätigungsventil 1, das sich in seiner Normalbetriebsstellung befindet und mit einem 2/2-Wegeventil 2 ausgebildet ist, in einem Längsschnitt entlang einer Längsachse 17 dargestellt. Das Notbetätigungsventil 1 ist mit den folgenden Elementen gebildet, die jeweils koaxial zu der Längsachse 17 angeordnet sind: Einem Handbetätigungsmittel 3, einem Gehäuseteil 19, einer das Handbetätigungsmittel 3 beaufschlagenden Druckfeder 20, einer Beaufschlagungseinrichtung 7, welche mit einer Spule 21 und einem die Spule 21 durchsetzenden gehäusefesten Spulenkern 22 gebildet ist, einem Ventilelement 4, welches einen Anker 43 und einen Schaft 44 besitzt; einem 2/2-Wegeventil 2 und einem Sensor 10.

Das Notbetätigungsventil 1 ist in Fig. 3 an einem Tragelement 38 befestigt. Dazu weist der Spulenkern 22 in einem Endbereich eine Erweiterung 23 und in seinem anderen Endbereich ein Außengewinde 24 auf. Zur Befestigung wird der Spulenkern 22 durch eine Ausnehmung 25 des Tragelements 38 gesteckt. Auf das Außengewinde 24 des Spulenkerns 22 wird dann das Gehäuseteil 19 aufgeschraubt. Mit dem Aufschrauben werden gleichzeitig die Spule 21 und das Tragelement 38 zwischen der Erweiterung 23 des Spulenkerns 22 und dem Gehäuseteil 19 verspannt. Zur Befestigung des 2/2-Wegeventils 2 weist ein Ventilgehäuse 51 des 2/2-Wegeventils 2 ein Innengewinde auf, mit dem das Ventilgehäuse 51 auf ein Außengewinde 52 der Erweiterung 23 des Spulenkerns 22 aufgeschraubt werden kann. Zur Abdichtung ist hierbei gemäß Fig. 3 ein Dichtelement 53, hier ein O-Ring 54, vorgesehen, welches zwischen der Erweiterung 23 und dem Ventilgehäuse 51 verspannt ist.

Der Spulenkern 22 ist mit einer durchgehende Ausnehmung 36 gebildet, die vorzugsweise rotationssymmetrisch um die Längsachse 17 ist und die sich koaxial zu dieser erstreckt. Die Ausnehmung 36 weist in dem einen Endbereich des Spulenkerns 22 einen Bund 39 und in dem anderen Endbereich des Spulenkerns 22 einen stufenartigen Absatz auf, mit dem eine Stirnfläche 18 des Spulenkerns 22 gebildet ist. Die Querschnitte der Ausnehmung 36 sind in beiden Endbereichen vergrößert.

Das Handbetätigungsmittel 3 ist bei dem in Fig. 3 dargestellten Notbetätigungsventil 1 als ein Betätigungsknopf 26 ausgebildet. Der Betätigungsknopf 26 erstreckt sich durch eine Ausnehmung 35 des Gehäuseteils 19 und die Ausnehmung 36 des Spulenkerns 22, wobei die Ausnehmung 35 wie die Ausnehmung 36 vorzugsweise rotationssymmetrisch ausgebildet und koaxial zu dieser ausgerichtet ist. Der Betätigungsknopf 26 ist mit einem Kopf 27 und einem Schaft 28 ausgebildet. Der Kopf 27 geht dabei über einen ersten Bund 29, eine erste zylinderförmige Mantelfläche 30, einen zweiten Bund 31, eine zweite zylinderförmige Mantelfläche 32 und einen dritten Bund 33 einstückig in den Schaft 28 des Betätigungsknopfs 26 über. Indem die Ausnehmung 35 des Gehäuseteils 19 entsprechend den zylinderförmigen Mantelflächen 30, 32 sowie dem Bund 31 ausgebildet ist, werden hierdurch Führungsflächen bereitgestellt, sodass der Betätigungsknopf 26 gegenüber dem Gehäuseteil 19 bei einer Betätigung in Richtung der Längsachse 17 geführt ist.

Der Betätigungsknopf 26 weist einen Anschlag 34 auf, der in der Normalbetriebsstellung des Notbetätigungsventils 1 an einem Bund 37 des Gehäuseteils 19 anliegt und über den der Betätigungsknopf 26 gegenüber dem Gehäuseteil 19 gefangen ist. Im Bereich des Schafts 28 ist koaxial zu der Längsachse 17 die Druckfeder 20 angeordnet, die sich zum einen an dem dritten Bund 33 des Betätigungsknopfs 26 und zum anderen an dem Bund 39 des Spulenkerns 22 abstützt. Durch die Federbeaufschlagung durch die Druckfeder 20 ist der Betätigungsknopf 26 somit in die in Fig. 3 dargestellte Stellung, in der der Anschlag 34 an dem Bund 37 anliegt, beaufschlagt. Eine Betätigung des Betätigungsknopfs 26 muss gegen die Federkraft der Druckfeder 20 erfolgen. Für das dargestellte Ausführungsbeispiel ist der Anschlag 34 von einem in einer Nut der Mantelfläche 32 angeordneten Sicherungsring ausgebildet.

In der in Fig. 3 dargestellten Normalbetriebsstellung des Notbetätigungsventils 1 erstreckt sich der Schaft 28 des Betätigungsknopfs 26 durch die Ausnehmung 36 des Spulenkerns 22 bis zu einem weiteren (ringförmigen, in Richtung des Ankers 43 parallel zur Längsachse 17 vorspringenden) Bund 40 des Spulenkerns 22 und liegt dort mit einer Stirnfläche 41 an einer Stirnfläche 42 des Ankers 43 des Ventilelements 4 an.

Das Ventilelement 4 erstreckt sich in der Ausnehmung 36 des Spulenkerns 22 von dem weiteren Bund 40 durch den Bereich der Erweiterung 23 und erstreckt sich mit dem Schaft 44 durch eine in Richtung der Längsachse 17 verlaufende Ausnehmung 45 des 2/2-Wegeventils 2. In der Ausnehmung 45 ist der Schaft 44 des Ventilelements 4 unter Abdichtung über Dichtelemente 46a bis c, die hier als O-Ringe 47a bis c ausgebildet sind, geführt. In der in Fig. 3 dargestellten Normalbetriebsstellung des Ventilelements 4 befindet sich das 2/2-Wegeventil 2 in einer Sperrstellung, in der zwei Querbohrungen 48, 49 durch das Dichtelement 46b gegeneinander gesperrt sind, womit ein Durchfluss eines Fluids von einer Querbohrung zu der anderen Querbohrung gesperrt ist. Der Schaft 44 ist in einem Querschnitt in einem Abschnitt 50 zur Bildung einer Steuernut verjüngt. Befindet sich der Abschnitt 50 des Schafts 44 in dem Bereich des Dichtelements 46b, sind die Querbohrungen 48 und 49 nicht gegeneinander abgedichtet, womit eine Durchlassstellung 6 des 2/2-Wegeventils 2 vorliegt.

Auf der dem Spulenkern 22 abgewandten Seite des 2/2-Wegeventils 2 ist an dem 2/2-Wegeventil 2 der Sensor 10 angeordnet, der in eine dafür vorgesehene Ausnehmung 55 des Ventilgehäuses 51 geschraubt ist. Der Sensor 10 ist hierbei als ein Reed-Sensor 56 ausgebildet. Der Reed-Sensor 56 weist eine koaxial zu der Längsachse 17 verlaufende Ausnehmung 57 auf, in die der Schaft 44 des Ventilelements 4 mit von der eingenommenen Stellung abhängigem Ausmaß hineinragt, sodass eine Position und/oder Stellung des Ventilelements 4 über den Reed-Sensor 56 erfasst werden kann.

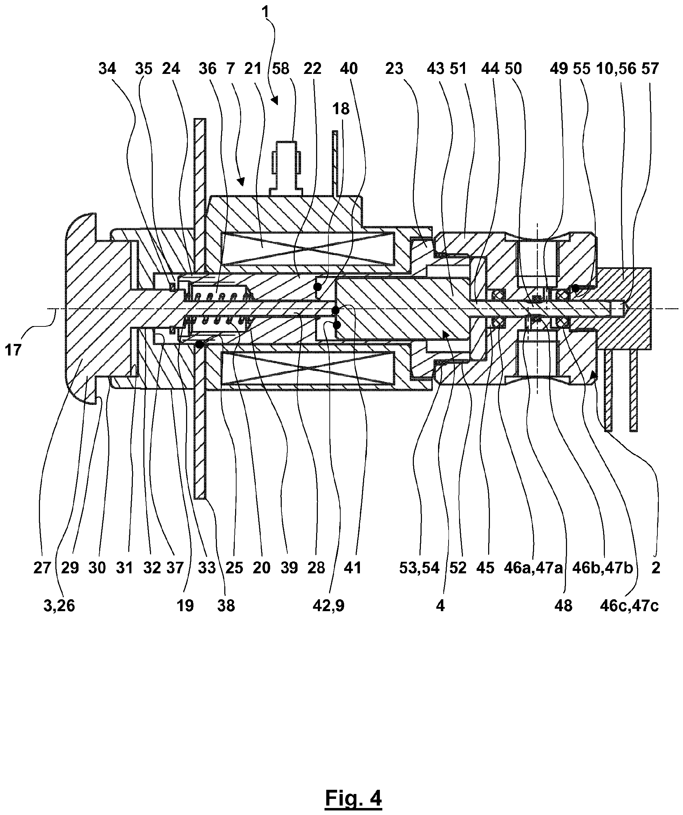

Ein Überführen von der in Fig. 3 dargestellten Normalbetriebsstellung in die in **Fig. 4** gezeigte Notbetriebsstellung des Notbetätigungsventils 1 kann durch eine manuelle Betätigung des Betätigungsknopfs 26 erfolgen. Mit dem Betätigen des Betätigungsknopfs 26 wird der Betätigungsknopf 26 entgegen der Federbeaufschlagung der Druckfeder 20 entlang der Längsachse 17 in Richtung des 2/2-Wegeventils 2 verschoben. Mit dem Schaft 28 des Betätigungsknopfs 26 wird das Ventilelement 4 entlang der Längsachse 17 in die gleiche Richtung verschoben, sodass der Abschnitt 50 des Schafts 44 des Ventilelements 4 in den Bereich des Dichtelements 46b bewegt ist. In der so erreichten Notbetriebsstellung sind, wie in Fig. 4 dargestellt, die Querbohrungen 48, 49 des 2/2-Wegeventils 2 und die zugeordneten Anschlüsse miteinander verbunden, d. h. das 2/2-Wegeventil 2 befindet sich in seiner Durchlassstellung.

Von der Notbetriebsstellung gemäß Fig. 4 kann das Ventilelement 4 wieder in die Normalbetriebsstellung, wie in Fig. 3 gezeigt, überführt werden, indem die Spule 21 der Beaufschlagungseinrichtung 7 elektrisch beaufschlagt wird. Dazu weist die Spule 21 einen elektrischen Anschluss 58 auf, über den die Spule 21 an eine hier nicht dargestellte elektrische Versorgung oder Steuereinheit angeschlossen und angesteuert werden kann. Durch die elektrische Beaufschlagung der Spule 21 wird ein Magnetfeld im Inneren der Spule 21 erzeugt, wodurch eine magnetische Kraft auf das Ventilelement 4 ausgeübt wird. Diese magnetische Kraft wirkt auf das Ventilelement 4 in Richtung des Betätigungsknopfs 26, und hat zur Folge, dass das Ventilelement 4 in diese Richtung verschoben wird, bis die Stirnfläche 42 des Ankers 43 des Ventilelements 4 zur Anlage an den Bund 40 des Spulenkerns 22 kommt. Die Stirnfläche 42 des Ankers 43 bildet damit (ähnlich wie in Fig. 1 und Fig. 2) einen Anschlag 9. Durch die elektrische Beaufschlagung der Spule 21 kann außerdem erreicht werden, dass das Ventilelement 4 in der in Fig. 3 dargestellten Normalbetriebsstellung mit der Sicherungskraft gesichert ist. Dann ist nämlich ein Abstand zwischen der Stirnfläche 42 des Ankers 43 zu dem Bund 40 des Spulenkörpers minimal, wodurch erreicht wird, dass der durch die Spule 21 bewirkte magnetische Fluss optimal durch den Spulenkern 22 und das Ventilelement 4 geführt wird und so eine besonders große Sicherungskraft erreicht wird.

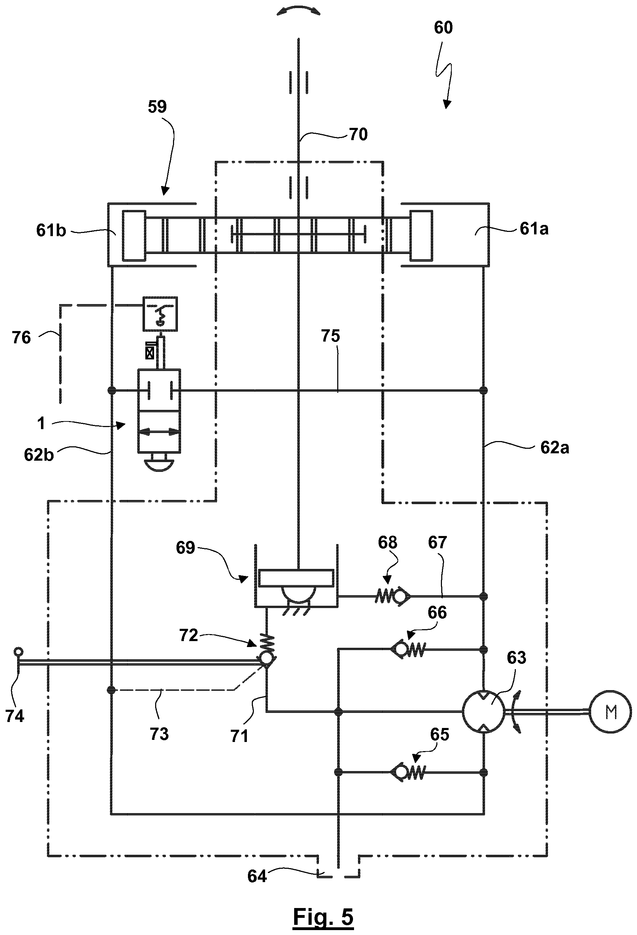

**Fig. 5** zeigt eine Integration eines erfindungsgemäßen Notbetätigungsventils 1 gemäß Fig. 1 in einen beispielhaften fluidischen, insbesondere hydraulischen Steuerkreis zur Ansteuerung einer Kolben-Zylinder-Einheit 59 einer Fahrzeugtür-Steuerung 60. Die Kolben-Zylinder-Einheit 59 besitzt Druckkammern 61a, 61b, die über den Druckkammern 61a, 61 b zugeordneten Druckkammerleitungen 62a, 62b mit saug- und druckseitigen Anschlüssen einer reversierbaren Pumpe 63 verbunden sind, sodass je nach Antriebsrichtung der Pumpe 63 Fluid, insbesondere ein Hydraulikmedium, von der Druckkammer 61a zu der Druckkammer 61b und umgekehrt förderbar ist. Hinsichtlich weiterer Details, insbesondere zu Steuerungsmöglichkeiten, zu Verbindungen des Steuerkreises mit einem fluidischen Vorrat 64 auf beiden Seiten der Pumpe 63 über Rückschlagventile 65, 66, zu einer Zweigleitung 67, welche eine Seite der Pumpe 63 über ein Rückschlagventil 68 mit einer zusätzlichen Kolben-Zylinder-Einheit 69 zum Anheben einer Drehsäule 70 verbindet und zu einer Entlüftungsleitung 71, welche eine Druckkammer der Kolben-Zylinder-Einheit 69 über ein Rückschlagventil 72 mit dem Vorrat 64 verbindet, wobei das Rückschlagventil 72 durch eine mit dem Druck in der Druckkammer 61b beaufschlagte Steuerleitung 73 oder manuell über ein Betätigungsorgan 74 entsperrt bzw. geöffnet werden kann, wird auf die Patentanmeldung DE 10 2010 002 625 A1 verwiesen, deren Inhalt zum Gegenstand der vorliegenden Patentanmeldung gemacht wird.

Zusätzlich zu der fluidischen Betätigung der Fahrzeugtür wird durch das Notbetätigungsventil 1 eine manuelle Notöffnung der Fahrzeugtür ermöglicht, indem über das Notbetätigungsventil 1 eine fluidische "Kurzschlussverbindung" zwischen der Druckkammerleitung 62a und der Druckkammerleitung 62b hergestellt werden kann. In Fig. 5 nimmt das Notbetätigungsventils 1 seine Normalbetriebsstellung ein, in der eine Verbindungsleitung 75 zwischen den Druckkammerleitungen 62a und 62b gesperrt ist und das Öffnen und Schließen der Fahrzeugtür im Normalbetrieb, d. h. durch eine fluidische Betätigung, wie in DE 10 2010 002 625 A1 beschrieben, erfolgt. Durch ein Überführen des Notbetätigungsventils 1 in die Notbetriebstellung wird aber eine fluidische Verbindung zwischen den Druckkammerleitungen 62a und 62b und damit zwischen den Druckkammern 61a und 61b hergestellt, sodass eine manuelle Notöffnung der Fahrzeugtür erfolgen kann. Hierbei hängen die erforderlichen manuellen Öffnungskräfte von der Drosselcharakteristik in der mit dem Notbetätigungsventil 1 gebildeten Kurzschlussleitung zwischen den Druckkammern 61a, 61b ab.

Über eine von dem Notbetätigungsventil 1 abgehende elektrische Leitung 76, kann ein von der von dem Notbetätigungsventil 1 eingenommenen Stellung abhängiges Signal an eine hier nicht dargestellte Steuereinheit weitergegeben werden.

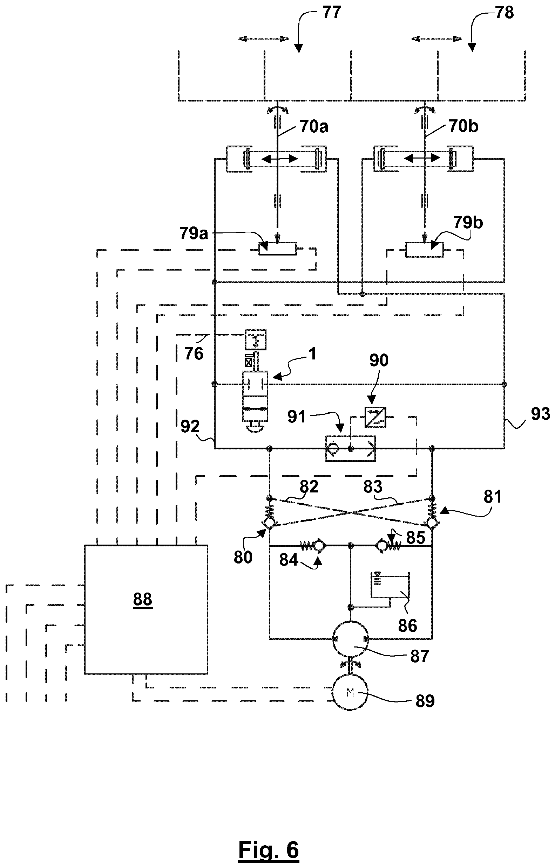

**Fig. 6** zeigt eine Integration eines erfindungsgemäßen Notbetätigungsventils 1 in einen elektrohydraulischen Steuerkreis für den synchronen Antrieb von zwei Fahrzeugtüren 77, 78, welche hier jeweils mit zwei Türflügeln ausgebildet sind, über zugeordnete Drehsäulen 70a, 70b. Insbesondere hinsichtlich des Aufbaus des Steuerkreises, der Steuerungsmöglichkeiten, der Erfassung der Stellbewegung über Sensoren 79a, 79b, einer Speisung der Druckkammern über Rückschlagventile 80, 81, der Ansteuerung der Rückschlagventile 80, 81 über Steuerleitungen 82, 83, Rückschlagventilen 84, 85 zwecks Nachfüllung von Leckagefluid aus einem Vorrat 86, der Integration einer reversierbaren Pumpe 87, einer Integration einer Steuereinheit 88 mit Zufuhr der Signale der Sensoren 79a, 79b, der Ansteuerung eines Antriebsaggregats 89 für die Pumpe 87, der Nutzung eines einzigen Drucksensors 90 für die Erfassung des Drucks in den beiden Beaufschlagungspfaden unter Nutzung eines Wechselventils 91 sowie weiterer Aspekte wird auf die nicht vorveröffentlichte Patentanmeldung EP 12 150 385.8 der Anmelderin verwiesen, welche zum Gegenstand der vorliegenden Anmeldung gemacht wird.

Über das erfindungsgemäßes Notbetätigungsventil 1 können entgegengesetzt zueinander wirkende Druckkammern beaufschlagende Leitungszweige 92, 93 miteinander verbunden werden. In der in der Fig. 6 wirksamen Stellung sind für den Normalbetrieb des elektrohydraulischen Steuerkreises die Leitungszweige 92, 93 durch das Notbetätigungsventils 1 voneinander getrennt. Für eine manuelle Notöffnung kann das Notbetätigungsventil 1 manuell über sein Handbetätigungsmittel 3 betätigt werden, wodurch das Notbetätigungsventil 1 in die Notbetriebsstellung überführt wird und das 2/2-Wegeventil seine Durchlassstellung einnimmt, in welcher dieses die Leitungszweige 92, 93 miteinander koppelt und "kurzschließt". Dann kann eine manuelle Notöffnung der Fahrzeugtüren 77, 78 erfolgen. Insbesondere kann bei der in Fig. 6 dargestellten Ausführung erfasst werden, ob sich das Notbetätigungsventil 1 in der Notbetätigungsstellung befindet. Dazu ist eine von dem Notbetätigungsventil 1 ausgehende elektrische Leitung 76 mit der Steuereinheit 88 verbunden, wobei über die elektrische Leitung 76 der Steuereinheit 88 ein von der Stellung des Notbetätigungsventils 1 abhängiges Signal zugeführt werden kann. Dieses Signal kann dann u. U. von der Steuereinheit 88 u. U. verarbeitet und/oder weitergeleitet werden, z. B. um dem Fahrer zu indizieren, ob das Notbetätigungsventil 1 betätigt ist.

Für mehrere Fahrzeugtüren kann ein gemeinsames Notbetätigungsventil 1 oder können mehrere Notbetätigungsventile 1 vorgesehen sein.

### BEZUGSZEICHENLISTE

- 1: Notbetätigungsventil
- 2: 2/2-Wegeventil
- 3: Handbetätigungsmittel
- 4: Ventilelement
- 5: Sperrstellung
- 6: Durchlassstellung
- 7: Beaufschlagungseinrichtung
- 8: Elektromagnet
- 9: Anschlag
- 10: Sensor
- 11: Taster
- 12: Kontakt
- 13: 3/2-Wegeventil
- 14: Anschluss
- 15: Anschluss
- 16: Anschluss
- 17: Längsachse
- 18: Stirnfläche
- 19: Gehäuseteil
- 20: Druckfeder
- 21: Spule
- 22: Spulenkern
- 23: Erweiterung
- 24: Außengewinde
- 25: Ausnehmung
- 26: Betätigungsknopf
- 27: Kopf
- 28: Schaft
- 29: Bund
- 30: Mantelfläche
- 31: Bund
- 32: Mantelfläche
- 33: Bund
- 34: Anschlag
- 35: Ausnehmung
- 36: Ausnehmung
- 37: Bund
- 38: Tragelement
- 39: Bund
- 40: Bund
- 41: Stirnfläche
- 42: Stirnfläche
- 43: Anker
- 44: Schaft
- 45: Ausnehmung
- 46: Dichtelement
- 47: O-Ring
- 48: Querbohrung
- 49: Querbohrung
- 50: Abschnitt
- 51: Ventilgehäuse
- 52: Außengewinde
- 53: Dichtelement
- 54: O-Ring
- 55: Ausnehmung
- 56: Reed-Sensor
- 57: Ausnehmung
- 58: Anschluss
- 59: Kolben-Zylinder-Einheit
- 60: Fahrzeugtür-Steuerung
- 61: Druckkammer
- 62: Druckkammerleitung
- 63: Pumpe
- 64: Vorrat
- 65: Rückschlagventil
- 66: Rückschlagventil
- 67: Zweigleitung
- 68: Rückschlagventil
- 69: Kolben-Zylinder-Einheit
- 70: Drehsäule
- 71: Entlüftungsleitung
- 72: Rückschlagventil
- 73: Steuerleitung
- 74: Betätigungsorgan
- 75: Verbindungsleitung
- 76: Leitung
- 77: Fahrzeugtür
- 78: Fahrzeugtür
- 79: Sensor
- 80: Rückschlagventil
- 81: Rückschlagventil
- 82: Steuerleitung
- 83: Steuerleitung
- 84: Rückschlagventil
- 85: Rückschlagventil
- 86: Vorrat
- 87: Pumpe
- 88: Steuereinheit
- 89: Antriebsaggregat
- 90: Drucksensor
- 91: Wechselventil
- 92: Leitungszweig
- 93: Leitungszweig

## Patentansprüche

1. Notbetätigungsventil (1) für eine Gewährleistung einer manuellen Notöffnung einer ansonsten fluidisch betätigten Fahrzeugtür (77, 78), mit
a) einem Ventilelement (4) und einem Handbetätigungsmittel (3), über das das Ventilelement (4) von einer Normalbetriebsstellung in eine Notbetriebsstellung überführbar ist, und
b) einer elektrisch angesteuerten Beaufschlagungseinrichtung (7), die mit einem Elektromagneten (8) gebildet ist, der elektromagnetisch auf das Ventilelement (4) einwirkt, wobei
c) das Ventilelement (4) über die Beaufschlagungseinrichtung (7)
ca) in der Normalbetriebsstellung mit einer Sicherungskraft sicherbar ist, welche größer ist als eine von einem Benutzer auf das Handbetätigungsmittel aufbringbare Betätigungskraft, und
cb) von der Notbetriebsstellung in die Normalbetriebsstellung überführbar ist.

2. Notbetätigungsventil (1) nach Anspruch 1, **dadurch gekennzeichnet, dass** das Ventilelement (4) bei elektrischer Beaufschlagung der Beaufschlagungseinrichtung (7)
a) von der Notbetriebsstellung in die Normalbetriebsstellung überführbar ist und/oder
b) in der Normalbetriebsstellung gesichert ist.

3. Notbetätigungsventil (1) nach einem der vorhergehenden Ansprüche, **dadurch gekennzeichnet, dass** das Ventilelement (4) mittels der Beaufschlagungseinrichtung (7) von der Normalbetriebsstellung in die Notbetriebsstellung überführbar ist.

4. Notbetätigungsventil (1) nach einem der vorhergehenden Ansprüche, **dadurch gekennzeichnet, dass** die elektrische Beaufschlagung der Beaufschlagungseinrichtung (7) über eine Steuereinheit (88) steuerbar ist.

5. Notbetätigungsventil (1) nach Anspruch 4, **dadurch gekennzeichnet, dass** die Steuereinheit (88) mit Steuerlogik ausgestattet ist, über die die elektrische Beaufschlagung der Beaufschlagungseinrichtung (7) in Abhängigkeit von einem Fahrantritt des Fahrzeugs steuerbar ist.

6. Notbetätigungsventil (1) nach Anspruch 5, **dadurch gekennzeichnet, dass** die Steuerlogik geeignet ausgebildet ist, um die elektrische Beaufschlagung der Beaufschlagungseinrichtung (7) in Abhängigkeit von einer Fahrgeschwindigkeit des Fahrzeugs zu steuern.

7. Notbetätigungsventil (1) nach einem der Ansprüche 4 bis 6, **dadurch gekennzeichnet, dass** die Steuereinheit (88) mit Steuerlogik ausgestattet ist, über die automatisch eine elektrische Beaufschlagung der Beaufschlagungseinrichtung (7) nach einem fluidischen Schließen der oder einer Fahrzeugtür (77, 78) derart erfolgt, dass das Ventilelement (4) die Normalbetriebsstellung einnimmt.

8. Notbetätigungsventil (1) nach einem der vorhergehenden Ansprüche, **dadurch gekennzeichnet, dass** das Fahrzeugtür-Notbetätigungsventil (1) einen Sensor (10) aufweist, welcher eine Position oder einen Stellweg des Ventilelements (4) erfasst.

9. Notbetätigungsventil (1) nach Anspruch 8, **dadurch gekennzeichnet, dass** an dem Ventilelement (4) ein Permanentmagnet angeordnet ist und der Sensor (10) ein Reed-Sensor (56) ist.

10. Notbetätigungsventil (1) nach einem der Ansprüche 8 und 9, **dadurch gekennzeichnet, dass** eine Steuereinheit (88) mit dem Sensor (10) verbindbar ist und die Steuereinheit (88) mit Steuerlogik ausgestattet ist, welche unter Berücksichtigung des Signals des Sensors (10) ein Signal erzeugt, welches indiziert, ob das Ventilelement (4) in der Notbetriebsstellung ist.

11. Notbetätigungsventil (1) nach einem der vorhergehenden Ansprüche, **dadurch gekennzeichnet, dass** das Ventilelement (4) in der Notbetriebsstellung eine Sicherung der Fahrzeugtür (77, 78) in der geschlossenen Stellung aufheben kann.

12. Notbetätigungsventil (1) nach einem der vorhergehenden Ansprüche, **dadurch gekennzeichnet, dass** das Ventilelement (4) ohne elektrische Beaufschlagung der Beaufschlagungseinrichtung (7) und ohne eine Betätigung des Handbetätigungsmittels (3) seine Notbetriebsstellung und seine Normalbetriebsstellung beibehält.

13. Notbetätigungsventil (1) nach einem der vorhergehenden Ansprüche, **dadurch gekennzeichnet, dass** der Elektromagnet (8) mit einer Spule (21) ausgebildet ist, die zumindest teilweise von einem Spulenkern (22) durchsetzt ist, welcher eine quer zur Längsachse der Spule (21) orientierte Stirnfläche (42) besitzt, die in der Normalbetriebsstellung einen minimalen Abstand von dem Ventilelement (4) aufweist.

14. Notbetätigungsventil (1) nach einem der vorhergehenden Ansprüche, **dadurch gekennzeichnet, dass** der Spulenkern (22) in einem Endbereich eine Erweiterung (23) besitzt und in einem anderen Endbereich ein Außengewinde (24) besitzt, wobei zwischen der Erweiterung (23) und einem auf das Außengewinde (24) aufgeschraubten Gehäuseteil (19) ein Tragelement (38) und ein Spulenkörper des Elektromagneten (8) verspannbar sind.

15. Notbetätigungsventil (1) nach Anspruch 14, **dadurch gekennzeichnet, dass** das Handbetätigungsmittel (3) gegenüber dem auf das Außengewinde (24) aufgeschraubten Gehäuseteil (19) geführt ist.

16. Notbetätigungsventil (1) nach Anspruch 14 oder 15, **dadurch gekennzeichnet, dass** die Erweiterung (23) des Spulenkerns (22) mit einem Gewinde (52) ausgestattet ist, mit welchem ein Ventilgehäuse (51) verschraubt ist.

17. Notbetätigungsventil (1) nach Anspruch 8 oder einem auf Anspruch 8 rückbezogenen Anspruch, **dadurch gekennzeichnet, dass** das Ventilelement (4) einen Fortsatz oder einen Schaft (44) besitzt, der mit dem Sensor (10) in Wirkverbindung tritt.

18. Notbetätigungsventil (1) nach einem der vorhergehenden Ansprüche, **dadurch gekennzeichnet, dass** das Handbetätigungsmittel (3) nur einseitig wirkend mit dem Ventilelement (4) gekoppelt ist, sodass mit dem Handbetätigungsmittel (3) nur Kräfte in eine Betätigungsrichtung auf das Ventilelement (4) ausgeübt werden können.

## Claims

1. Emergency valve (1) for a provision of a manual emergency opening of an otherwise fluidically actuated vehicle door (77, 78) with
a) a valve element (4) and a manual actuation means (3) by which it is possible to transfer the valve element (4) from a normal operational position into an emergency operational position and
b) an electrically controlled biasing device (7) comprising an electromagnet (8) which electromagnetically biases the valve element (4),
wherein
c) by the biasing device (7) the valve element (4)
ca) can be secured in the normal operational position with a securing force which is higher than an actuation force applicable by a user via the manual actuation means and
cb) can be transferred from the emergency operational position into the normal operational position.

2. Emergency valve (1) of claim 1, **characterised in that** when electrically biasing the biasing device (7) the valve element (4)
a) can be transferred from the emergency operational position into the normal operational position and/or
b) is secured in the normal operational position.

3. Emergency valve (1) of one of the preceding claims, **characterised in that** by the biasing device (7) it is possible to transfer the valve element (4) from the normal operational position into the emergency operational position.

4. Emergency valve (1) of one of the preceding claims, **characterised in that** the electric bias of the biasing device (7) can be controlled by a control unit (88).

5. Emergency valve (1) of claim 4, **characterised in that** the control unit (88) comprises control logic by which it is possible to control the electric bias of the biasing device (7) dependent on a start of the driving mode of the vehicle.

6. Emergency valve (1) of claim 5, **characterised in that** the control unit is configured for controlling the electric bias of the biasing device (7) dependent on a driving velocity of the vehicle.

7. Emergency valve (1) of one of claims 4 to 6, **characterised in that** the control unit (88) comprises control logic by which after a fluidic closing of the or a vehicle door (77, 78) the biasing device (7) is electrically biased in an automatic way such that the valve element (4) takes the normal operational position.

8. Emergency valve (1) of one of the preceding claims, **characterised in that** the vehicle door emergency valve (1) comprises a sensor (10) which senses a position or a displacement of the valve element (4).

9. Emergency valve (1) of claim 8, **characterised in that** a permanent magnet is arranged at the valve element (4) and the sensor (10) is a reed-sensor (56).

10. Emergency valve (1) of one of claims 8 and 9, **characterised in that** a control unit (88) is connectable to the sensor (10) and the control unit (88) comprises control logic which under consideration of the signal of the sensor (10) generates a signal which indicates if the valve element (4) is in the emergency operational position.

11. Emergency valve (1) of one of the preceding claims, **characterised in that** in the emergency operational position the valve element (4) is able to release a securing of the vehicle door (77, 78) in the closed position.

12. Emergency valve (1) of one of the preceding claims, **characterised in that** without electric bias of the biasing device (7) and without an actuation of the manual actuation means (3) the valve element (4) maintains its emergency operational position and its normal operational position.

13. Emergency valve (1) of one of the preceding claims, **characterised in that** the electromagnet (8) comprises a coil (22) which is at least partially penetrated by a coil core (21), the coil core (22) comprising a front surface (42) having an orientation transvers to the longitudinal axis of the coil (21) and in the normal operational position the front surface (42) having a minimal distance from the valve element (4).

14. Emergency valve (1) of one of the preceding claims, **characterised in that** the coil core (22) comprises an enlargement (23) in one end region and an outer thread (24) in another end region, a supporting element (38) and a coil body of the electromagnet (8) being clampable between the enlargement (23) and a housing part (19) which can be screwed onto the outer thread (24).

15. Emergency valve (1) of claim 14, **characterised in that** the manual actuation means (3) is guided by or relativ to the housing part (19) which is screwed onto the outer thread (24).

16. Emergency valve (1) of claim 14 or 15, **characterised in that** the enlargement (23) of the coil core (22) comprises a thread (52) to which a valve housing (51) is screwed.

17. Emergency valve (1) of claim 8 or any claim referring back to claim 8, **characterised in that** the valve element (4) comprises a protrusion or shaft (44) which cooperates with the sensor (10).

18. Emergency valve (1) of one of the preceding claims, **characterised in that** the manual actuation means (3) is only one-directionally coupled to the valve element (4) so that it is only possible to apply forces by the manual actuation means (3) in one actuation direction onto the valve element (4).

## Revendications

1. Soupape d'actionnement d'urgence (1) pour la garantie d'une ouverture d'urgence manuelle d'une porte de véhicule (77, 78) normalement actionnée par un fluide, avec
a) un élément de soupape (4) et un moyen d'actionnement manuel (3), par l'intermédiaire duquel l'élément de soupape (4) peut être amené d'une position de fonctionnement normal vers une position de fonctionnement d'urgence et
b) un dispositif de sollicitation électrique (7) qui est constitué d'un électro-aimant (8) qui agit de manière électromagnétique sur l'élément de soupape (4),
c) l'élément de soupape (4) peut, par l'intermédiaire du dispositif de sollicitation (7),
ca)être sécurisé dans la position de fonctionnement normal avec une force de sécurisation qui est supérieure à une force d'actionnement pouvant être exercée par un utilisateur sur le moyen d'actionnement manuel et
cb)être amené de la position de fonctionnement d'urgence vers la position de fonctionnement normal.

2. Soupape d'actionnement d'urgence (1) selon la revendication 1, **caractérisée en ce que** l'élément de soupape (4), lors d'une sollicitation électrique du dispositif de sollicitation (7),
a) peut être amené de la position de fonctionnement d'urgence vers la position de fonctionnement normal et/ou
b) est sécurisé dans la position de fonctionnement normal.

3. Soupape d'actionnement d'urgence (1) selon l'une des revendications précédentes, **caractérisée en ce que** l'élément de soupape (4) peut être amené de la position de fonctionnement normal vers la position de fonctionnement d'urgence au moyen du dispositif de sollicitation (7).

4. Soupape d'actionnement d'urgence (1) selon l'une des revendications précédentes, **caractérisée en ce que** la sollicitation électrique du dispositif de sollicitation (7) peut être contrôlée par l'intermédiaire d'une unité de commande (88).

5. Soupape d'actionnement d'urgence (1) selon la revendication 4, **caractérisée en ce que** l'unité de commande (88) est équipée d'une logique de commande par l'intermédiaire de laquelle la sollicitation électrique du dispositif de sollicitation (7) peut être contrôlée en fonction d'une marche du véhicule.

6. Soupape d'actionnement d'urgence (1) selon la revendication 5, **caractérisée en ce que** la logique de commande est conçu pour contrôler la sollicitation électrique du dispositif de sollicitation (7) en fonction d'une vitesse du véhicule.

7. Soupape d'actionnement d'urgence (1) selon l'une des revendications 4 à 6, **caractérisée en ce que** l'unité de commande (88) est équipée d'une logique de commande, par l'intermédiaire de laquelle une sollicitation électrique du dispositif de sollicitation (7) a lieu automatiquement après une fermeture fluidique de la ou d'une porte du véhicule (77, 78), de façon à ce que l'élément de soupape (4) adopte la position de fonctionnement normal.

8. Soupape d'actionnement d'urgence (1) selon l'une des revendications précédentes, **caractérisée en ce que** la soupape d'actionnement d'urgence de la porte du véhicule (1) comprend un capteur (10) qui détecte une position ou une course de l'élément de soupape (4).

9. Soupape d'actionnement d'urgence (1) selon la revendication 8, **caractérisée en ce que**, sur l'élément de soupape (4) est disposé un aimant permanent et le capteur (10) est un capteur Reed (56).

10. Soupape d'actionnement d'urgence (1) selon l'une des revendications 8 et 9, **caractérisée en ce qu'**une unité de commande (88) peut être reliée avec le capteur (10) et l'unité de commande (88) est équipée d'une logique de commande qui génère, en tenant du signal du capteur (10), un signal qui indique si l'élément de soupape (4) se trouve dans la position de fonctionnement d'urgence.

11. Soupape d'actionnement d'urgence (1) selon l'une des revendications précédentes, **caractérisée en ce que** l'élément de soupape (4) peut lever, dans la position de fonctionnement d'urgence, une sécurisation de la porte du véhicule (77, 78) dans la position fermée.

12. Soupape d'actionnement d'urgence (1) selon l'une des revendications précédentes, **caractérisée en ce que** l'élément de soupape (4) conserve, sans sollicitation électrique du dispositif de sollicitation (7) et sans actionnement du moyen d'actionnement manuel (3), sa position de fonctionnement d'urgence et sa position de fonctionnement normal.

13. Soupape d'actionnement d'urgence (1) selon l'une des revendications précédentes, **caractérisée en ce que** l'électro-aimant (8) est conçu avec une bobine (21), qui est traversée au moins partiellement par un noyau de bobine (22), qui comprend une face frontale (42) orientée transversalement par rapport à l'axe longitudinal de la bobine (21), qui présente, dans la position de fonctionnement normal, une distance minimale par rapport à l'élément de soupape (4).

14. Soupape d'actionnement d'urgence (1) selon l'une des revendications précédentes, **caractérisée en ce que** le noyau de bobine (22) comprend, au niveau d'une extrémité, un élargissement (23) et, au niveau d'une autre extrémité, un filetage externe (24), moyennant quoi, entre l'élargissement (23) et une partie de boîtier (19) vissée sur le filetage externe (24), un élément porteur (38) et un corps de bobine de l'électro-aimant (8) peuvent être serrés.

15. Soupape d'actionnement d'urgence (1) selon la revendication 14, **caractérisée en ce que** le moyen d'actionnement manuel (3) est guidé par rapport à la partie de boîtier (19) vissée sur le filetage externe (24).

16. Soupape d'actionnement d'urgence (1) selon la revendication 14 ou 15, **caractérisée en ce que** l'élargissement (23) du noyau de bobine (22) est équipée d'un filetage (52) avec lequel un boîtier de soupape (51) est vissé.

17. Soupape d'actionnement d'urgence (1) selon la revendication 8 ou une revendication faisant référence à la revendication 8, **caractérisée en ce que** l'élément de soupape (4) comprend un prolongement ou une tige (44) qui est en liaison fonctionnelle avec le capteur (10).

18. Soupape d'actionnement d'urgence (1) selon l'une des revendications précédentes, **caractérisée en ce que** le moyen d'actionnement manuel (3) est couplé, avec une action d'un seul côté, à l'élément de soupape (4), de façon à ce que, avec le moyen d'actionnement manuel (3), puissent être exercées sur l'élément de soupape (4) des forces dans une seule direction d'actionnement.
